# FASCICULE DE BREVET EUROPEEN

(11) **EP 0 034 237 B1**
(45) Date de publication et mention de la délivrance du brevet: **26.01.1994**
(21) Numéro de dépôt: 80810060.6
(22) Date de dépôt: 18.02.1980
(51) Int. Cl.: A61C 1/05

(54) **Instrument dentaire avec pièce à main**
Zahnärztliches Instrument mit Handstück
Dental instrument with handpiece

(43) Date de publication de la demande: 26.08.1981
(73) Titulaire: Bien-Air, D. Mosimann, CH-2502 Bienne (CH)
(72) Inventeur: Mosimann, David, CH-2503 Bienne (CH); Walther, Theodor, CH-2543 Lengnau b. Biel (CH); Schnider, Jean-Pierre, CH-2503 Bienne (CH)
(74) Mandataire: Micheli, Michel-Pierre

(56) Documents cités:
- FR-A- 2 173 034
- FR-A- 2 199 964
- FR-A- 2 403 065
- US-A- 3 521 359
- US-A- 3 921 296
- US-A- 4 177 564

## Description

L'invention a trait à un instrument dentaire avec pièce à main comprenant une tête porte-outil et étant montée de manière amovible à l'extrémité antérieure d'une section intermédiaire de l'instrument, qui contient un micromoteur destiné à entraîner l'outil porté par la tête de la pièce à main, l'extrémité postérieure de cette section intermédiaire étant raccordée à une station d'alimentation par une gaine flexible et la pièce à main pouvant tourner librement par rapport à la gaine, autour de l'axe de l'instrument.

Dans les instruments connus de ce type, c'est la pièce à main seule qui est rotative. La section intermédiaire contenant le moteur est, de son côté, attachée de façon rigide à un embout fixé à l'extrémité de la gaine flexible qui relie l'instrument à la station d'alimentation. Pour assurer la rotation de la pièce à main, son extrémité postérieure présente un alésage qui est engagé sur un canon central de la section intermédiaire, faisant saillie à son extrémité antérieure et à travers lequel passent des organes reliant le rotor du moteur à l'outil porté par la pièce à main. Comme le moteur tourne à des vitesses relativement élevées dans les instruments dentaires modernes, il importe de refroidir la place de travail de l'outil, tout en en évacuant les débris qu'il produit. A cet effet, la pièce à main porte, ou bien une buse destinée à projeter un mélange d'air et d'eau en direction de la place de travail, ou alors une paire de buses juxtaposées, destinées à projeter dans cette direction, l'une de l'eau et l'autre de l'air produisant une vaporisation de l'eau. Ces fluides proviennent de la station d'alimentation. Ils sont amenés à l'instrument par des tubes contenus dans la gaine flexible et ils traversent la section intermédiaire et la pièce à main par des canaux aménagés entièrement ou partiellement à l'intérieur de ces éléments.

Pour connecter un canal de la section intermédiaire à un canal de la pièce à main rotative, la première solution qui vienne à l'esprit est de recourir à un tube souple s'étendant à l'extérieur de l'instrument, entre un orifice de sortie de la section intermédiaire et un orifice d'entrée de la pièce à main. C'est aussi la première qui a été introduite dans la pratique. Dans ce cas, ce tube souple fait généralement partie de la pièce à main, à laquelle il est relié en permanence, et son extrémité libre est munie d'un embout enfichable dans la section intermédiaire.

Vu l'encombrement causé par un tel tube souple, la pièce à main ne comprend qu'une seule buse. Un mélangeur de l'air et de l'eau est prévu en amont de ce tube, éventuellement dans l'embout de son extrémité libre, de sorte qu'un seul tube extérieur suffit à la production du jet purgeur et de refroidissement (BR-CH 604 670).

Cette solution a toutefois l'inconvénient de limiter la rotation de la pièce à main par la longueur du tube extérieur. Par ailleurs, plus ce tube est long, plus grand est le risque de l'arracher en l'accrochant à des objets étrangers. Il peut aussi gêner la manipulation de l'instrument, car il s'étend précisément dans la zone de celui-ci qui est tenue entre le bout des doigts.

C'est pourquoi actuellement, la préférence est donnée aux solutions dans lesquelles les canaux traversant l'instrument sont situés entièrement à l'intérieur de ses éléments. La connexion entre un canal de la section intermédiaire et le canal correspondant de la pièce à main rotative est alors établie par un espace annulaire prévu entre deux surfaces contiguës de la section intermédiaire et de la pièce à main, et dont l'étanchéité est assurée par deux garnitures disposées de part et d'autre de cet espace, dans des rainures de la section intermédiaire ou de la pièce à main. Dans les exécutions pratiques, ces rainures sont formées, non dans des faces planes, mais dans des faces cylindriques, afin que les garnitures d'étanchéité ne tombent pas lors d'un changement de la pièce à main (BR-GB 1 519 513, BR-DE 2 334 448, BR-CH 604 670).

Lors de l'accrochement d'une pièce à main à la section intermédiaire de l'instrument, ce qui se fait assez fréquemment, ces garnitures d'étanchéité sont donc ou bien comprimées pour s'introduire dans un alésage, ou alors distendues, pour s'engager sur une face cylindrique, selon qu'elles se trouvent dans des rainures d'une portée cylindrique ou d'un alésage. Dans les deux cas, c'est l'arête frontale de l'alésage ou de la portée cylindrique qui produit cette déformation des garnitures d'étanchéité. Or, il n'est pas rare que ces garnitures soient endommagées par cette arête, par exemple à la suite d'un accrochage trop brusque et pas très adroit de la pièce à main à la section intermédiaire.

La solution définie par la caractéristique de la revendication 1 élimine ce risque. La connexion des canaux de la section intermédiaire à ceux de la pièce à main est directe. Elle peut se faire simplement en introduisant les entrées en saillie des canaux de la pièce à main dans les sorties des canaux correspondants de la section intermédiaire, à l'instar de ce qui se fait dans chaque ménage avec les fiches et prises de courant électrique.

Le raccord tournant de l'instrument selon l'invention, qui se trouve à l'extrémité postérieure de celui-ci, a aussi l'avantage de former une unité que le dentiste n'a pas besoin de dissocier. Pratiquement, ce raccord tournant est assemblé une fois pour toutes, puis manipulé en bloc. Un démontage éventuel n'intervient, en effet, que pour des réparations ou des révisions, opérations que des mécaniciens spécialisés effectuent et non les dentistes.

Par rapport aux instruments connus, dont la pièce à main tourne par rapport à la section intermédiaire contenant le micromoteur, l'instrument selon l'invention a encore l'avantage d'améliorer les conditions d'utilisation. L'orientation de l'outil peut être modifiée par pronation ou par supination, c'est-à-dire par rotation de toute la main et de l'avant-bras, sans avoir à modifier la position du bout des doigts sur la pièce à main, comme il faut le faire avec les instruments connus, pour faire tourner la pièce a main par rapport à la section intermédiaire. Avec l'instrument selon l'invention, la sensibilité de la main reste donc rigoureusement la même quelque changement d'orientation de l'outil que le dentiste effectue dans la bouche du patient.

L'idée de faciliter la manipulation d'un instrument dentaire de cette façon n'est pas nouvelle pour des pièces à main dentaires dont la tête porte-outil est équipée d'une turbine à air, au rotor de laquelle l'outil de travail est fixé pour être entrainé à de très grandes vitesses : plusieurs centaines de mille tours par minute (US-A-3 521 359, FR-A-2 173 034, FR-A-2 199 964, US-A-3 921 296, US-A-4 177 564, FR-A-2 403 065).

Par contre, ceci n'a pas pu être réalisé jusqu'à ce jour pour des pièces à main équipées de micromoteur électriques pour lesquelles, outre l'air et l'eau, il est encore nécessaire de prévoir des conducteurs électriques pour l'alimentation du moteur qui doivent également traverser le raccord tournant pour obtenir le but visé. C'est précisemment ce que propose la présente invention.

Quelques formes d'exécution de l'instrument selon l'invention sont décrites ci-après, à titre d'exemple, en référence au dessin, dans lequel;
La figure 1 est une vue générale en élévation d'une forme d'exécution de l'instrument selon l'invention, la pièce à main étant partiellement séparée de la section intermédiaire;
La figure 2 est une coupe à granche échelle, selon la ligne II-II de la figure 3, montrant un détail d'une autre forme d'exécution;
La figure 3 est une vue en bout de l'extrémité droite de la Figure 2;
La figure 4 est une vue partiellement en coupe selon la ligne IV-IV de la Figure 5 du même détail que celui de la Figure 2, mais d'une autre forme d'exécution;
La figure 5 est une vue en bout de l'extrémité droite de la Figure 4,
La figure 6 est une vue semblable à celle de la Figure 4 d'un détail d'une dernière forme d'exécution.

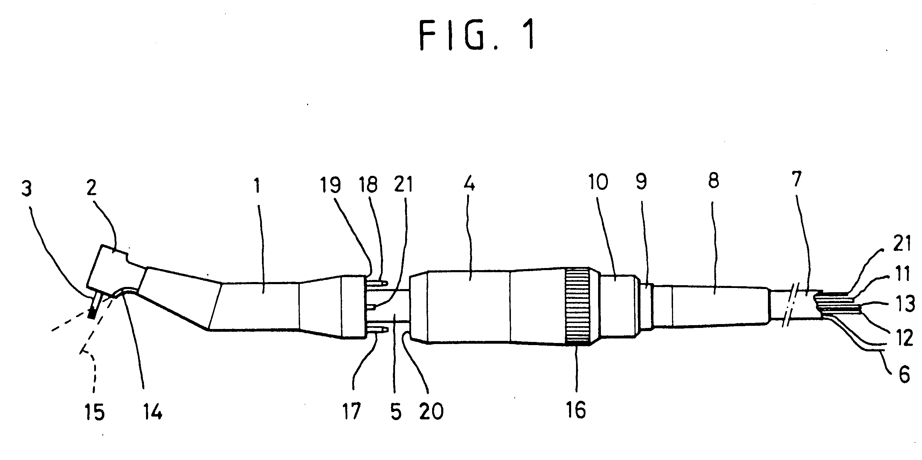

L'instrument représenté à la figure 1 comprend une pièce à main 1 ayant, à son extrémité antérieure, une tête 2 porte-outil, capable de recevoir n'importe lequel des outils conventionnels des dentistes, en particulier une fraise 3, et de l'entraîner en rotation autour de son axe. La pièce à main 1 est destinée à être rattachée à une section intermédiaire 4 de l'instrument, qui contient un micromoteur électrique de type connu. Cette section intermédiaire 4 présente un canon 5, qui fait saillie de son extrémité antérieure et livre passage à l'arbre du moteur. Lors de la mise en place d'une pièce à main 1 sur la section intermédiaire 4, ce canon 5 lui sert d'organe de guidage. A cet effet, le canon 5 pénètre dans un alésage de la pièce à main et assure le centrage de cette dernière sur la section intermédiaire 4 et aussi l'accouplement correct des organes de transmission (non représentés) prévus entre le micromoteur contenu dans la section intermédiaire 4 et la fraise 3.

L'excitation de ce moteur est assurée à partir d'une station d'alimentation conventionelle (non représentée) par des fils électriques 6, passant à travers une gaine flexible 7, reliant la station d'alimentation à l'instrument. A son extrémité aval, la gaine 7 est munie d'un embout 8, qui est fixé à une première pièce 9 d'un raccord, dont une seconde pièce 10 est fixée à l'extrémité postérieure de la section intermédiaire 4, la pièce 9 pouvant tourner librement dans la pièce 10, coaxialement à l'instrument.

Au cours d'un travail dans la bouche d'un patient, le dentiste peut, grâce au raccord tournant 9, 10, modifier à volonté l'inclinaison de l'axe de la fraise 3, sans modifier la position du bout des doigts sur la pièce à main 1, par simple supination ou pronation de la main et de l'avant-bras, et cela, sans être gêné par la résistance à la torsion de la gaine 7.

Comme le micromoteur et la fraise 3 tournent à des vitesses de l'ordre de quelques dizaines de milliers de tours par minute, il est indispensable d'assurer le refroidissement non seulement du moteur, mais aussi de la place de travail. A cet effet, la station d'alimentation envoie par un tube 11 contenu dans la gaine 7 un courant d'air de refroidissement au moteur, ainsi que de l'eau et de l'air sous pression à l'instrument par des tubes 12 et 13 également contenus dans la gaine 7. Ces fluides sous pression traversent longitudinalement tout l'instrument, pour arriver à des buses juxtaposées 14 de la tête 2, ces buses étant dirigées vers l'extrémité de la fraise 3. L'air sortant de l'une de ces buses vaporise l'eau sortant de l'autre buse et produit un jet 15 de très fines gouttelettes d'eau en direction de la place de travail de la fraise 3. A l'aide d'une bague rotative (non représentée), qui pourrait être agencée en amont du raccord tournant, le débit de l'eau sous pression peut être modifié de façon connue et la consistance du jet 15 réglée à volonté. L'amenée d'eau peut même être interrompue, de façon à ne plus souffler que de l'air en direction de la place de travail, par exemple en vue de la purger des débris produits à la suite d'un travail de la fraise 3.

L'eau et l'air du jet 15 sont amenés aux buses 14 par des canaux qui traversent longitudinalement la pièce à main 1 et qui font saillie en 17 et 18 à son extrémité postérieure. En orientant convenablement la pièce à main 1 autour du canon 5, ces extrémités saillantes 17 et 18 peuvent être introduites dans des orifices de sortie de canaux (non représentés) de la section intermédiaire 4, qui communiquent avec les tubes 12 et 13 de la gaine 7. Lorsque la face postérieure 19 de la pièce à main 1 est plaquée contre la face antérieure 20 de la section intermédiaire 4, un dispositif de verrouillage conventionnel (non représenté) retient la pièce à main 1 axialement en place sur le canon 5.

Dans la forme d'exécution de la Fig. 1, la station d'alimentation envoie encore de la lumière à l'instrument par une fibre optique 21 passant à travers la gaine 7 et arrivant jusqu'à la tête 2, d'où elle éclaire la place de travail.

Dans un instrument qui serait solidaire en rotation de la gaine 7, l'équipement décrit ci-dessus ne présenterait aucune difficulté d'agencement. On comprendra cependant qu'il n'est possible dans la forme d'exécution décrite qu'à la condition d'arriver à faire passer l'ensemble des lignes d'alimentation contenues dans la gaine 7 à travers les deux pièces du raccord 9, 10, qui doivent pouvoir tourner librement l'une dans l'autre.

Quelques formes d'exécution de ce raccord sont représentées en détail dans les figures suivantes du dessin.

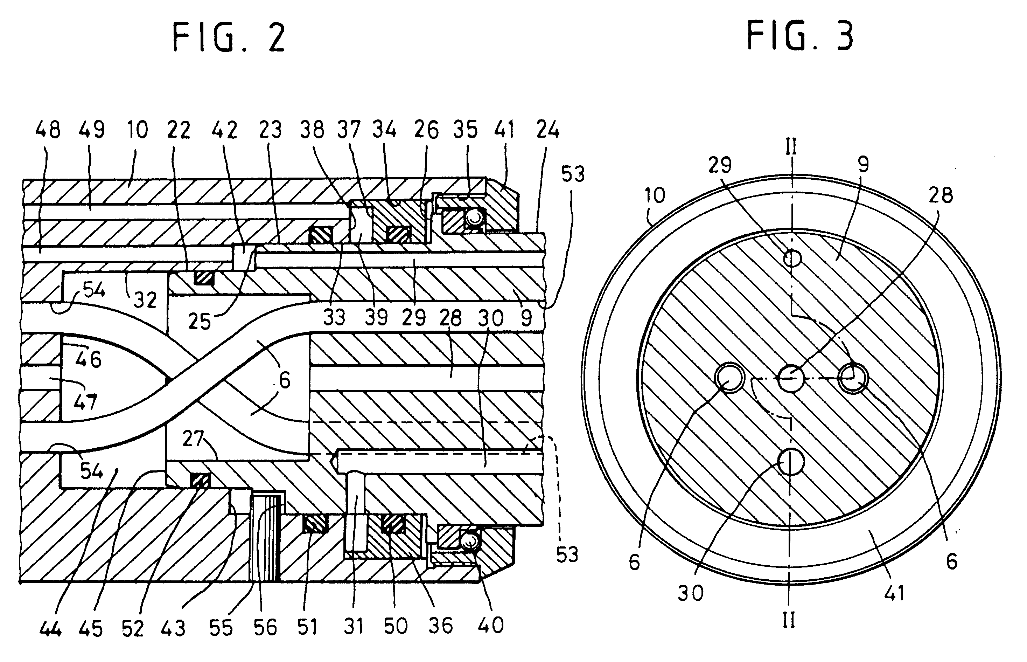

La forme d'exécution représentée aux Fig. 2 et 3 diffère toutefois de celle de la Fig. 1 par le fait qu'elle ne comprend pas d'éclairage de la place de travail, donc pas de fibre optique.

La pièce 9 du raccord tournant présente trois portées cylindriques 22, 23, 24, séparées les unes des autres par des épaulements 25 et 26. Une creusure 27 est formée au centre de sa face antérieure. Enfin, trois canaux 28, 29, 30 sont percés axialement dans cette pièce 9. Le premier, 28, dans l'axe de la pièce 9, débouche au centre de la creusure 27 et le second, 29, dans l'épaulement 25. Quant au troisième perçage, 30, il est borgne, mais un canal 31, percé radialement, le relie à la portée 23. L'embout 8 de la gaine flexible 7 (Fig. 1) est fixé à la pièce 9 de façon à mettre en communication le canal 28 avec le tube 11, le canal 29 avec le tube 12 et le canal 30 avec le tube 13.

Quant à la pièce 10 du raccord tournant, elle présente trois alésages 32, 33, 34 et un filetage 35. Une bague interne 36 est chassée dans l'alésage 34. Un dégagement 37, tourné dans la bague 36, forme avec l'épaulement 38 de la pièce 10, situé entre ses alésages 33 et 34, un espace annulaire 39 en forme de gorge tout autour de la pièce 9 et dans lequel débouche le trou radial 31 de cette pièce, quelque position angulaire qu'elle occupe par rapport à la pièce 10.

La pièce 9 est retenue en place dans la pièce 10 avec un léger jeu axial par son épaulement 26, qui est emprisonné avec interposition d'un roulement à billes axial 40 entre la bague 36 et un écrou 41, vissé à fond dans le filetage 35. La portée 23 de la pièce 9 pénètre dans l'alésage 33 de la pièce 10, en laissant toutefois un espace libre 42 entre son épaulement 25 et l'épaulement 43 de la pièce 10. La portée 22 de la pièce 9 entre, de même, dans l'alésage 32 de la pièce 10, en laissant cependant un espace libre 44 entre sa face frontale 45 et le fond 46 de l'alésage 32. Trois canaux 47, 48, 49 traversent la pièce 10, l'un, 47, central, à partir du fond 46 de l'alésage 32, le second, 48, à partir de l'épaulement 43, et le dernier, 49, à partir de l'épaulement 38. La pièce 10 est fixée à la section intermédiaire 4 de l'instrument à l'aide d'un écrou 16 (Fig. 1), de façon que les canaux 47, 48, 49 communiquent avec les canaux correspondants de cette section.

Grâce à l'espace annulaire 39, l'air sous pression arrivant à la pièce 9 par le canal 30 peut toujours passer dans le canal 49 de la pièce 10 et arriver finalement à la buse correspondante de la tête 2 (Fig. 1) dans quelque position angulaire que se trouvent les pièces 9, 10 l'une par rapport à l'autre. De même, l'espace annulaire 42 permet à l'eau sous pression de passer en permanence du canal 29 de la pièce 9 au canal 48 de la pièce 10. Quant aux canaux 28 et 47 pour l'air de refroidissement du moteur, ils communiquent entre eux par la chambre centrale constituée par la creusure 27 et l'espace libre 44. L'étanchéité des espaces annulaires 39 et 42 est garantie par trois garnitures d'étanchéité 50, 51, 52.

Dans cette forme d'exécution, les fils électriques 6 de la ligne alimentant le micromoteur sont continus. Au droit du raccord tournant 9, 10, ils passent dans des forures 53 et 54 des pièces 9 et 10 et traversent librement la chambre centrale 27, 44 entre ces deux pièces. Vu cette disposition des fils 6, il est évident que les pièces 9, 10 ne sauraient tourner indéfiniment dans le même sens. Dans cette forme d'exécution, la pièce 10 porte un prisonnier 55 qui plonge dans une rainure 56 de la pièce 9, s'étendant seulement sur une partie de sa périphérie.

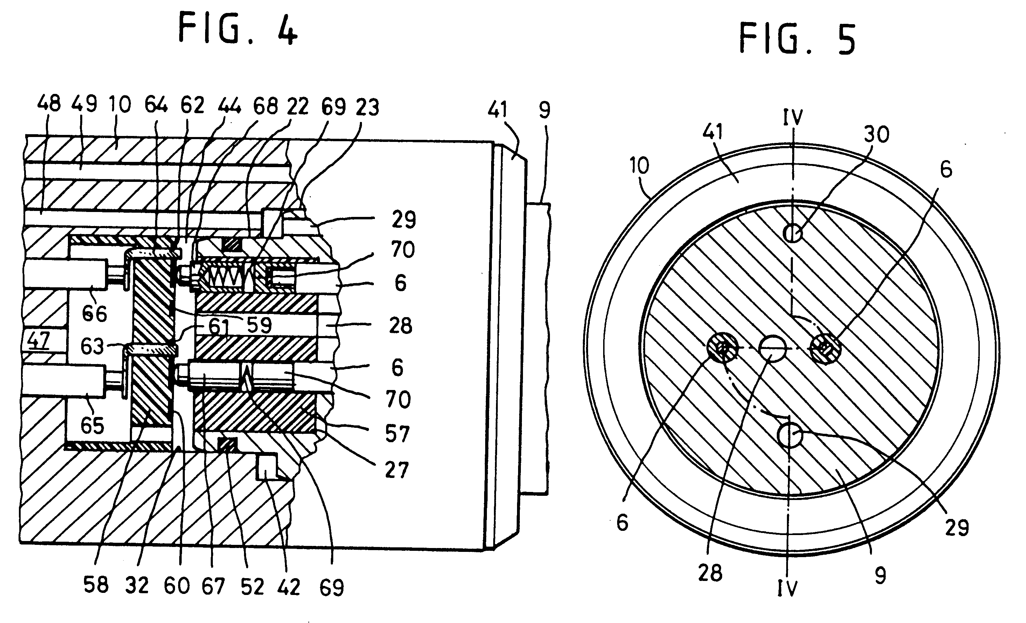

La forme d'exécution des Fig. 4 et 5 ne diffère de la précédente que par la façon dont le passage de la ligne d'alimentation du micromoteur contenu dans la section intermédiaire de l'instrument est assuré à travers le raccord tournant. Dans cette exécution, un bouchon 57 en matière isolante est introduit dans la creusure 27 de la face frontale de la pièce 9 et une plaque 58, également en matière isolante, est disposée dans le fond de l'alésage 32 de la pièce 10. Sur sa face tournée vers la pièce 9, la plaque 58 porte deux anneaux conducteurs 59, 60, concentriques, centrés sur l'axe de rotation des pièces 9, 10. Par des bras 61, 62 et des pièces de connexion 63, 64 traversant la plaque 58, les anneaux 59, 60 sont reliés électriquement au micromoteur par des fils 65, 66. Quant aux fils 6, contenus dans la gaine 7 (Fig. 1), ils aboutissent dans des forures de la pièce 9 et du bouchon 57, dont les distances à l'axe de rotation des pièces 9, 10 sont égales aux rayons moyens des anneaux 59, 60. Des balais 67, 68, guidés dans les forures du bouchon 57, sont poussés contre les anneaux 59, 60 par des ressorts 69 prenant appui sur des capuchons 70 soudés aux extrémités des fils 6 et établissent ainsi un contact à frottement qui, dans toutes les positions relatives des pièces 9 et 10, relie en permanence les fils 6 arrivant de la station d'alimentation aux fils 65 et 66 connectés au moteur. Par rapport à la forme d'exécution des Fig. 2 et 3, celle des Fig. 4 et 5 a ainsi l'avantage de permettre des rotations relatives illimitées des pièces 9 et 10.

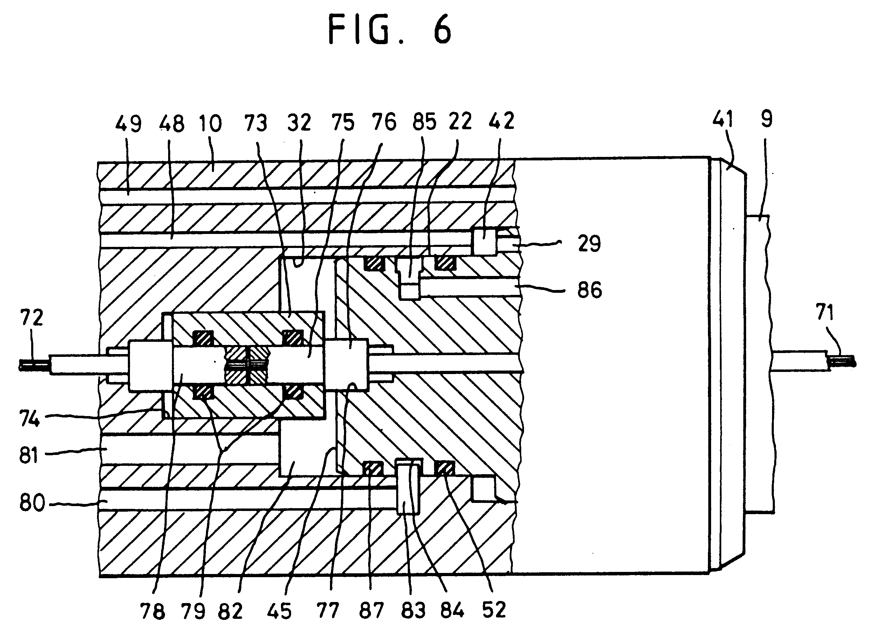

La dernière forme d'exécution (Fig. 6) se distingue des précédentes par l'agencement d'un éclairage par fibre optique de la place de travail.

Cette fibre optique est composée de deux brins 71, 72, le premier, 71, arrivant d'une source de lumière de la station d'alimentation, et, le second, 72, allant vers la tête 2 de la pièce à main 1 (Fig. 1). Dans le raccord 9, 10, ces deux brins s'étendent selon l'axe de rotation des deux pièces qui le composent, afin de rester bout à bout dans toutes les positions angulaires relatives de ces deux pièces. Pour garantir la coaxialité des deux brins de la fibre optique, un manchon 73 est engagé à force dans une forure 74 pratiquée au centre du fond de l'alésage 32 de la pièce 10. Un embout 75, fixé à l'extrémité du brin 71, présente une portée 76 engagée à force dans une forure 77 pratiquée au centre de la face frontale 45 de la pièce 9. Il est, par ailleurs, ajusté à frottement doux à l'alésage du manchon 73 . Le brin 72 de la fibre optique porte, de même, un embout 78 solidaire de la pièce 10 et du manchon 73. Des garnitures d'étanchéité 79 préviennent l'infiltration d'impuretés dans l'espace entre les extrémités des deux brins de la fibre optique.

Dans cette forme d'exécution, l'air de refroidissement du micromoteur ne sera naturellement plus amené par des canaux centraux des deux pièces 9, 10, comme dans les exécutions des Fig. 2 à 5, mais par des canaux excentrés.

Vu que les coordonnées et les dimensions des différents canaux des instruments dentaires sont normalisées, il suffit d'adapter les entrées et sorties des canaux des raccords décrits à ces coordonnées et dimensions pour permettre l'utilisation de ces raccords avec n'importe quel instrument existant.

Par ailleurs, il n'est pas indispensable que la pièce à main ait deux buses, respectivement pour l'air et pour l'eau. Elle peut n'en comprendre qu'une seule, alimentée par un fluide de refroidissement établi à partir d'air et d'eau par un mélangeur qui peut être prévu déjà dans la station d'alimentation ou entre celle-ci et l'instrument décrit ou bien dans la section intermédiaire de ce dernier ou encore dans une pièce insérée entre cette section et la pièce à main ou, enfin, dans un embout à l'extrémité d'un tube souple de la pièce à main, s'étendant à l'extérieur de cette dernière et destiné à être enfiché dans un orifice latéral de la section intermédiaire. Il est naturellement aussi possible d'utiliser l'un quelconque des raccords tournants décrits ci-dessus dans un instrument combiné pour recevoir indifféremment des pièces à main dans lesquelles l'alimentation du jet d'eau vaporisée est assurée soit par un canal intérieur soit par un tube souple extérieur.

## Revendications

1. Instrument dentaire du type à entraînement par micromoteur électrique comprenant une tête porte-outils (2) fixée à une pièce à main (1) montée de façon amovible à une section intermédiaire (4) par un premier raccordement (5) rendant la pièce à main (1) et la section intermédiaire (4) solidaires en rotation, un micromoteur contenu dans ladite section intermédiaire (4), un dispositif à raccord tournant (10, 9) d'une part relié par un second raccordement (16) à la section intermédiaire (4) et d'autre part connecté par un embout (8) à une gaine flexible (7) elle-même raccordée à une station d'alimentation, ledit premier raccordement comprenant des moyens de guidage (5) assurant le centrage de la pièce à main (1) par rapport à la section intermédiaire (4) et l'accouplement mécanique des organes de transmission prévus entre le micromoteur et la tête porte-outils (2), le second raccordement comportant un écrou (16) destiné à fixer la section intermédiaire (4) audit dispositif à raccord tournant, ce dernier comportant deux pièces (9, 10) pouvant tourner librement l'une par rapport à l'autre et comportant des parties (22, 23 ; 32, 33) emboîtées l'une dans l'autre et formant entre elles un palier lisse permettant à l'une de ces pièces de tourner librement par rapport à l'autre, l'alimentation d'un dispositif (14), qui projette un fluide (15) en direction de l'outil (3) étant assurée par des conduites, respectivement d'air et d'eau, que la station d'alimentation propulse sous pression à travers des tubes (12, 13) contenus dans ladite gaine flexible (7), chacune de ces conduites comprenant un canal (29, 30) percé à travers l'une (9) des deux dites pièces du dispositif de raccord tournant (9, 10) , qui est raccordé à l'un desdits tubes (12, 13) et qui communique avec un second canal (48, 49) percé à travers l'autre pièce (10) de ce dispositif de raccord tournant (9, 10) par un espace annulaire (39, 42) étanche, formé entre des épaulements (26, 38; 25, 43) correspondants des deux pièces (9, 10) situés dans les parties de celles-ci qui sont emboîtées l'une dans l'autre, des conducteurs électriques (6, 65, 66) étant disposés dans chacune desdites deux pièces (9, 10) du dispositif de raccord, une chambre centrale (27, 44) aménagée entre l'extrémité de l'une desdites pièces (9) du raccord, qui est engagée dans un logement central de l'autre pièce (10), et le fond (46) de ce logement comportant une connexion mobile (6; 59, 60; 67, 68) pour chacun des conducteurs électriques de l'une (9) des pièces le reliant au conducteur correspondant de l'autre pièce (10) de façon à assurer le passage au travers du dispositif de raccord d'un courant électrique alimentant le micromoteur électrique contenu dans la section intermédiaire (4).

2. Instrument dentaire selon la revendication 1, caractérisé en ce que l'alimentation dudit moteur est assurée par des fils électriques (6) isolés, logés dans des forures (53, 54) des deux dites pièces (9, 10) et passant librement à travers ladite chambre centrale (27, 44), un mécanisme d'arrêt (55, 56) limitant l'amplitude des rotations de l'une des pièces dudit dispositif de raccord tournant par rapport à l'autre et des canaux (28, 47) prévus dans les deux pièces du dispositif de raccord, qui communiquent entre eux par ladite chambre centrale (27, 44) et qui assurent l'arrivée au moteur d'un courant d'air de refroidissement provenant de la station d'alimentation par un tube (11) contenu dans ladite gaine flexible (7).

3. Instrument dentaire selon la revendication 1, caractérisé par l'alimentation dudit micromoteur assurée par des conducteurs (6, 65, 66) engagés dans des forures des deux dites pièces dudit dispositif de raccord, les conducteurs de l'une desdites pièces étant connectés à ceux de l'autre pièce par un dispositif de contact à frottement (67, 68; 59, 60) logé dans ladite chambre centrale (27, 44) et comprenant des balais (67, 68) qui sont montés aux extrémités des conducteurs (6) de l'une desdites pièces du dispositif de raccord et qui appuient contre des anneaux (59, 60) auxquels sont connectés les conducteurs (65, 66) de l'autre pièce (10) du dispositif de raccord (9, 10) et par des canaux (28, 47) percés dans les deux pièces du dispositif de raccord, qui communiquent entre eux par ladite chambre centrale (27, 44) et qui assurent l'arrivée au moteur d'un courant d'air de refroidissement, provenant de la station d'alimentation par un tube (11) contenu dans ladite gaine flexible (7).

4. Instrument dentaire selon l'une des revendications précédentes, caractérisé en ce qu'il est équipé d'un dispositif d'éclairage de la place de travail de l'outil (3) par fibre optique, un premier brin (21, 71) de fibre passant à travers ladite gaine flexible (7) et abouttissant à celle (9) des deux pièces dudit dispositif de raccord (9, 10) qui est solidaire de cette gaine et un autre brin (72) de fibre partant de l'autre pièce (10) du dispositif de raccord et traversant la section intermédiaire (4) et la pièce à main (1), les extrémités de ces deux brins de fibre, qui se trouvent dans les deux pièces du dispositif de raccord étant disposées selon leur axe de rotation.

## Claims

1. A dental instrument of the type driven by an electric micromotor, including a tool carrying head (2) fastened to a handpiece (1) removably mounted on an intermediate section (4) by a first connector (5) locking together in rotation the handpiece (1) and the intermediate section (4), a micromotor housed in said intermediate section (4), a rotatory connector device (10, 9) connected on the one hand through a second connector (16) to the intermediate section (4) and connected on the other hand through an adaptor (8) to a flexible sheath (7) which in turn is connected to a supply source, said first connector including guide means (5) for ensuring the centering of the handpiece (1) with respect to the intermediate section (4) and the mechanical coupling of the transmission members provided between the micromotor and the tool carrying head (2), the second connector including a nut (16) designed for fastening the intermediate section (4) to said rotatory connector device, the latter including two parts (9, 10) which can rotate freely with respect to each other and which include parts (22, 23; 32, 33) lodged one inside the other and forming together a sliding bearing which allows one of these parts to rotate freely with respect to the other, the supply of a device (14), which projects a fluid (15) in the direction of the tool (3), being provided for by conduits for respectively water and air, which the supply source projects under pressure through tubes (12, 13) housed in said flexible sheath (7), each one of these conduits including a channel (29, 30) extending through one (9) of the said parts of the rotatory connector device (9, 10), which is connected to one of said tubes (12, 13) and which communicates with a second channel (48, 49) extending through the other piece (10) of this rotatory connector device (9, 10) through a sealed annular space (39, 42) formed between the corresponding shoulders (26, 38; 25, 43) of the two parts (9, 10) located in the sections thereof which are fitted into each other, electric conductors (6, 65, 66) being lodged in each one of said two parts (9, 10) of the connector device, a central chamber (27, 44) being provided between the end of one of said parts (9) of the connector which is engaged in a central housing of the other part (10), and the bottom (46) of this housing including a movable connexion (6; 59, 60; 67, 68) for each one of the electric conductors of one (9) of the parts connecting the same to the corresponding conductor of the other part (10), so as to ensure the passage through the connector device of electric current supplying the electric micromotor contained in the intermediate section (4).

2. A dental instrument according to claim 1, characterized in that the supply of said motor is provided for by insulated electric wires (6) housed inside bores (53, 54) of the two said parts (9, 10) and extending freely through said central chamber (27, 44), a stop mechanism (55, 56) limiting the extent of rotation of one of the parts of said connector device rotating relatively to the other and channels (28, 47) provided in the two parts of the connector device, which communicate with each other through said central chamber (27, 44) and which ensure the arrival to the motor of a flow of cooling air supplied from the supply source via a tube (11) housed inside said flexible sheath (7).

3. A dental instrument according to claim 1, characterized in that the supply of said micromotor is provided for by conductors (6, 65, 66) engaged inside bores in said two parts of said connector device, the conductors of one of said parts being connected to those of the other part by a friction contact device (67, 68; 59, 60) housed in said central chamber (27, 44) and including brushes (67, 68) which are mounted at the ends of the conductors (6) of one of said parts of the connector device and which abut against annular rings (59, 60) to which are connected the conductors (65, 66) of the other part (10) of the connector device (9, 10) and by channels (28, 47) bored through the two parts of the connector device which communicate between themselves through said central chamber (27, 44) and through which cooling air is supplied from the supply source via a tube (11) housed in said flexible sheath (7).

4. A dental instrument according to one of the preceding claims, characterized in that it is equipped with a lighting device at the working position of the tool (3) which is supplied through an optical fibre, a first fibre length (21, 71) extending through said flexible sheath (7) up to one of the two parts (9) of said connector device (9, 10) which is fastened to this sheath, and another fibre length (72) extending from the other part (10) of the connector device through the intermediate section (4) and the handpiece (1), the ends of these two fibre lengths, which are located in the two parts of the connector device, being arranged along their axis of rotation.

## Patentansprüche

1. Zahnärztliches Instrument des Typs mit elektrischem Kleinstmotor mit einem auf einem Handgriff (1) befestigten Werkzeugkopf (2), wobei der Handgriff durch ein erstes Verbindungselement (5) herausziehbar mit einem Zwischenstück (4) so verbunden ist, dass der Handgriff (1) und das Zwischenstück (4) bei Drehungen eine Einheit bilden, mit einem Kleinstmotor in dem genannten Zwischenstück (4), einer drehbaren Verbindungsvorrichtung (10, 9), die einerseits durch ein zweites Verbindungselement (16) mit dem Zwischenstück (4) und andererseits durch ein Übergangsstück (8) mit einer biegsamen Hülle (7) verbunden ist, wobei die Hülle ihrerseits an eine Speisevorrichtung angeschlossen ist, mit Führungshilfen (5) an dem genannten ersten Verbindungsstück, die eine Zentrierung des Handgriffs (1) gegenüber dem Zwischenstück (4) sowie das mechanische Ankoppeln der Übertragungsorgane zwischen dem Kleinstmotor und dem Werkzeugkopf (2) sicherstellen, mit einer Schraubenmutter (16) an dem genannten zweiten Verbindungsstück, die dazu bestimmt ist, das Zwischenstück (4) an der genannten drehbaren Verbindungsvorrichtung zu befestigen, wobei letztere Vorrichtung aus zwei Teilen (9, 10) besteht, die gegeneinander frei drehbar angeordnet sind und ihrerseits Teile (22, 23; 32, 33) enthalten, die ineinander stecken und zusammen ein Gleitlager bilden, durch das die zwei Teile gegenseitig frei drehbar sind, wobei die Versorgung einer Vorrichtung (14), die eine Flüssigkeit in die Richtung des Werkzeugs (3) treibt, durch Leitungen für Luft bzw. für Wasser sichergestellt wird, die von der Speisevorrichtung unter Druck durch in der genannten biegsamen Hülle (7) steckende Schläuche (12, 13) geschickt werden, wobei jede der Leitungen einen Kanal (29, 30) einschliesst, der durch eines (9) der beiden Teile der drehbaren Verbindungsvorrichtung gebohrt, an die genannten Schläuche (12, 13) angeschlossen ist und mit einem zweiten Kanal (48, 49) in Verbindung steht, der durch das andere Teil (10) der drehbaren Verbindungsvorrichtung (9, 10) gebohrt ist, wobei die Verbindung zwischen entsprechenden Kanälen durch einen abgedichteten ringförmigen Raum (39, 42) zustande kommt, der zwischen entsprechenden Vorsprüngen (26, 38; 25, 43) in dem Abschnitt der zwei Teile (9, 10) gebildet wird, wo diese ineinander stecken, ferner elektrische Leitungen (6, 65, 66), die in jedem der beiden Teile (9, 10) der Verbindungsvorrichtung angeordnet sind, eine zentral gelegene Kammer (27, 44) zwischen dem Ende des einen (9) der beiden Teile der Verbindungsvorrichtung, das in einem zentralen Lager des anderen Teils (10) ruht, und der Rückseite (46) dieses Lagers, das mit einem beweglichen Anschluss (6; 59, 60; 67, 68) für jeden der elektrischen Leiter des einen Teils (9) versehen ist, der diese Leiter mit dem entsprechenden Leiter des anderen Teils (10) so verbindet, dass ein elektrischer Strom zur Versorgung des elektrischen Kleinstmotors im Zwischenstück (4) durch die Verbindungsvorrichtung fliessen kann.

2. Zahnärztliches Instrument gemäss Anspruch 1, dadurch gekennzeichnet, dass die Versorgung des genannten Motors durch isolierte elektrische Drähte (6) sichergestellt wird, die in Bohrungen (53, 54) der genannten Teile (9, 10) untergebracht sind und frei durch die genannte zentrale Kammer (27, 44) laufen, ein Anschlag (55, 56), der die Verdrehung des einen der beiden Teile der genannten drehbaren Verbindungsvorrichtung relativ zum anderen Teil begrenzt, und Kanäle (28. 47) in den beiden Teilen der Verbindungsvorrichtung, die miteinander über die genannte zentrale Kammer (27, 44) in Verbindung stehen und dafür sorgen, dass der Motor einem kühlenden Luftstrom ausgesetzt wird, der von der Speisevorrichtung durch einen Schlauch (11) in der genannten biegsamen Hülle (7) zugeführt wird.

3. Zahnärztliches Instrument nach Anspruch 1, dadurch gekennzeichnet, dass die Versorgung des genannten Kleinstmotors durch Leiter (6, 65, 66) sichergestellt ist, die in Bohrungen der zwei genannten Teile der genannten Verbindungsvorrichtung untergebracht sind, wobei die Leiter des einen dieser Teile mit denen des anderen Teils durch eine Schleifkontaktvorrichtung (67, 68; 59, 60) verbunden sind, die in der genannten zentralen Kammer (27, 44) untergebracht ist und Bürsten (67, 68) enthält, die auf den Leiterenden (6) eines der Teile der Verbindungsvorrichtung angebracht sind und Ringen (59, 60) aufliegen, die mit den Leitern (65, 66) des anderen Teils (10) der Verbindungsvorrichtung verbunden sind, sowie durch Kanäle (28, 47), die durch die beiden Teile der Verbindungsvorrichtung gebohrt sind, miteinander über die genannte zentrale Kammer (27, 44) in Verbindung stehen und dafür sorgen, dass der Motor einem kühlenden Luftstrom ausgesetzt wird, der von der Speisevorrichtung durch einen Schlauch (11) in der genannten biegsamen Hülle (7) zugeführt wird.

4. Zahnärztliches Instrument gemäss einem der vorstehenden Ansprüche, dadurch gekennzeichnet, dass es mit einer Vorrichtung zur Beleuchtung des Arbeitsorts des Werkzeugs (3) durch eine optische Faser ausgerüstet ist, wobei ein erstes Stück (21, 71) der Faser durch die genannte biegsame Hülle (7) läuft und bis an jenes (9) der beiden Teile der genannten Verbindungsvorrichtung (9, 10) heranführt, das mit der Hülle fest verbunden ist, und ein anderes Stück (72) der Faser vom anderen Teil (10) der Verbindungsvorrichtung aus durch das Zwischenstück (4) und den Handgriff (1) hindurchführt, wobei die beiden Faserenden, die sich in den zwei Teilen der Verbindungsvorrichtung befinden, entlang der Drehachse dieser Teile angeordnet sind.
